# EUROPÄISCHE PATENTSCHRIFT

(11) **EP 2 456 593 B1**
(45) Veröffentlichungstag und Bekanntmachung des Hinweises auf die Patenterteilung: **02.09.2015**
(21) Anmeldenummer: 10736721.1
(22) Anmeldetag: 26.07.2010
(51) Int. Cl.: B23P 11/02, H05B 6/14

(54) **NEBELKÜHLUNG**
FOG COOLING
REFROIDISSEMENT PAR BROUILLARD

(30) Priorität: 24.07.2009 DE 102009034730
(43) Veröffentlichungstag der Anmeldung: 30.05.2012
(73) Patentinhaber: Franz Haimer Maschinenbau KG, 86568 Hollenbach-Igenhausen (DE)
(72) Erfinder: HAIMER, Franz, 86568 Hollenbach (DE)
(74) Vertreter: Misselhorn, Hein-Martin
(86) Internationale Anmeldenummer: PCT/EP2010/060807
(87) Internationale Veröffentlichungsnummer: WO 2011/009962

(56) Entgegenhaltungen:
- EP-A1- 1 584 408
- EP-A2- 1 138 422
- DE-A1-102005 024 766
- DE-A1-102007 000 906
- DE-A1-102007 044 097
- DE-A1-102008 051 282
- DE-U1-202006 002 270
- DE-U1-202007 000 869
- FR-A1- 2 844 734

## Beschreibung

Die Erfindung betrifft eine Technologie zur Wiederabkühlung eines zuvor einer Wärmeapplikation unterworfenen Gegenstandes, zumeist eines mehrteiligen Schrumpfverbundes, insbesondere in Gestalt eines Schrumpffutters zum zentrischen Einschrumpfen des Schafts eines Rotationswerkzeugs, beispielsweise eines Bohrers, Fräsers oder Reibwerkzeugs. Eine solche Vorrichtung wird im Folgenden schlagwortartig als "Kühlvörrichtung" bezeichnet.

Es existiert zahlreicher Stand der Technik, der sich mit der Lösung des Problems einen Werkzeughalter abzukühlen befasst, der zuvor erhitzt worden ist, um in ihn ein Werkzeug aus- oder einzuschrumpfen.

Grob zusammengefasst sind bislang drei unterschiedliche Kühl-Prinzipien vorgeschlagen worden. Nämlich die Luftkühlung, die Flüssigkeitskühlung und die Kühlung durch Festkörperkontakt, d.h. durch inniges Inkontaktbringen der zu kühlenden Oberfläche des Werkzeughalters mit einem stark wärmeleitenden Kühlkörper, in den die Wärme abfließt.

Die europäische Patentanmeldung EP 1 138 422 A2 und beispielsweise auch das japanische Patent JP 2002079426 schlagen eine Luftkühlung vor, die dadurch realisiert wird, dass der erhitzte Werkzeughalter der kräftigen Kühlluftströmung eines Gebläses ausgesetzt wird. Ein Kühlluftstrom vermag den Werkzeughalter sehr gleichmäßig und schonend zu kühlen, so dass keine Gefahr besteht, dass sich der anfangs stellenweise ca. 300° bis 400° heiße Werkzeughalter durch das Abkühlen verzieht. Ein gravierender Nachteil jeglicher Luftkühlung ist indes der, dass der Abkühlvorgang vergleichsweise langsam vonstatten geht und daher erhebliche Zeit benötigt.

Die französische Patentanmeldung FR 2 844 734 schlägt eine Vorrichtung zur Kühlung des Werkzeughalters primär durch Festkörperkontakt vor - der heißen Hülsenpartie des Werkzeughalters wird ein Kühlring übergestülpt, dessen Innenoberfläche innig an der Hülsenpartie anliegt und ihr durch Wärmeleitung Hitze entzieht, die dann von dem Kühlring über seine im Kühlluftstrom liegenden Kühlrippen nach außen abgegeben wird. Der Kühlring vergrößert also gegenüber herkömmlicher Luftkühlung die von der Kühlluft wirksam bestrichene Oberfläche.

Ein solcher Kühlring muss aufgesetzt und wieder angenommen werden, erzwingt also einen zusätzlichen Arbeitsschritt, der Zeit kostet und daher den Vorteil der schnelleren Abkühlung als bei direkter Anblasung des Werkzeughalters zunichte macht. Noch gravierender ist das Problem, dass die zu kühlenden Hülsenpartien der verschiedenen Werkzeughalter unterschiedliche Durchmesser bzw. Konturen aufweisen und daher ein ganzer Satz unterschiedlicher Kühlringe bereitgehalten werden muss, da das Prinzip des Kühlring nur dann funktioniert, wenn sich der Kühlring innig an die jeweilige Hülsenpartie anschmiegen kann. Es ist also nicht nur ein erhöhter Material-, Lager- und Bereitstellungsaufwand erforderlich, vielmehr muss auch jeweils manuell oder mit entsprechendem apparativem Aufwand der passende Kühlring ausgewählt werden. Zudem ist die maximal erreichbare Kühlleistung eines solchen Systems naturgemäß durch das Wärmeleitvermögen des Kühlkörpers begrenzt. Infolgedessen sind der Kühlleistung insbesondere dann Grenzen gesetzt, wenn der Kühlkörper nicht instationär verwendet wird (also aus dem anfänglich kalten Zustand heraus aufgeheizt wird), sondern unmittelbar nacheinander diverse Werkzeughalter herunterkühlen muss.

Die deutschen Patentanmeldungen DE 103 20 641 A1 und DE 10 2007 000 906 A1 schlagen jeweils eine Flüssigkeitskühlung in Gestalt eines Tauchbades vor, in das der erhitzte Werkzeughalter abgesenkt wird. Auf diese Art und Weise wird der erhitzte Werkzeughalter jeweils sehr schnell abgekühlt. Dieser Zeitvorteil wird allerdings zu einem guten Teil wieder dadurch zunichte gemacht, dass der vollständig bzw. intensiv benetzte Werkzeughalter (schon um Korrosion zu vermeiden) in einem anschließenden Schritt erst wieder getrocknet werden muss, bevor er eingelagert werden kann. Zudem birgt ein derart schroffes Abkühlen stets die Gefahr, dass sich der Werkzeughalter verzieht und belastet den Werkzeughalter auch dann in erheblichem Maße, wenn er sich nicht gleich verzieht.

Die Patentanmeldungen EP 1 584 408 A1 und WO 2007/028522 A2 schlagen eine Flüssigkeitskühlung durch Bespritzen bzw. Besprühen des abzukühlenden Werkzeughalters mit einem flüssigen kühlmittel vor. In beiden Fällen sind drei gelochte Rohre vorgesehen, die seitlich neben und rund um das abzukühlende Spannfutter verteilt angeordnet sind, wobei aus jedem der Löcher ein Kühlmittelstrahl unmittelbar auf das Spannfutter abgegeben wird. Dieser Kühlmittelstrahl muss naturgemäß stark genug sein, um die gesamte von ihm zu kühlende Fläche (nämlich ein Drittel des zu kühlenden Außenumfangs) hinreichend zu benetzen.

Ein solches unmittelbares Bespritzen oder Besprühen hat den Vorteil, dass der abzukühlende Werkzeughalter schnell aber wenigstens nicht allzu zu schroff abgekühlt wird. Auch hier besteht allerdings nach wie vor das Problem, dass es praktisch unmöglich ist, den Werkzeughalter genauso gleichmäßig abzukühlen, wie es beispielsweise mit der Luftkühlung. Denn selbst dann, wenn die das Kühlmittel abgebenden Düsen gleichmäßig um den Werkzeughalter herum angeordnet sind, ist es unvermeidlich, dass bestimmte Partien des Werkzeughalters stärker mit dem Kühlmittel bespritzt oder besprüht werden als andere Partien.

Daher besteht bei einer solchen Kühlung ausschließlich durch direktes Bespritzen oder Besprühen nach wie vor die Gefahr dass sich der Werkzeughalter verzieht und sei es auch nur um einem kleinen Betrag, der bei anderen Bauteilen als einem Werkzeughalter, an den höchste Anforderungen in Bezug auf seine Rundlaufeigenschaften gestellt werden, vielleicht gar nicht stören würde. Zudem stellt sich nach wie vor das Problem, dass es nur rudimentär möglich ist, die Kühlleistung zu variieren - so schlägt beispielsweise die WO 2007/028522 A2 ein intervallartiges Ein- und Ausschalten der Kühlmitteldüsen vor, um die Abkühlgeschwindigkeit wenigstens ansatzweise beeinflussen zu können.

Zudem wird der Werkzeughalter durch eine direkte Bedüsung mit dem flüssigen Kühlmittel intensiv benetzt und muss daher im Anschluss an den Abkühlvorgang erst wieder längere Zeit getrocknet werden.

Schließlich hat eine solche Kühlung ausschließlich durch direktes Bespritzen oder Besprühen mit dem Kühlmittel den Nachteil, dass in der Anfangsphase des Abkühlvorgangs, wenn der Werkzeughalter noch sehr heiß ist, ein nicht unerheblicher Teil des Kühlmittels verdampft und womöglich in die Umgebung austritt, oder mit Hilfe gesonderter Vorkehrungen aufgefangen werden muss, um die Umgebung nicht zu belasten.

Schließlich ist noch festzuhalten, dass ganz generell bei all denjenigen Vorrichtungen aus dem Stand der Technik, die flüssiges Kühlmittel verwenden, durchweg das Problem besteht, dass besondere Maßnahmen getroffen werden müssen, um das nach dem Wiederherausziehen des Werkzeughalters aus dem Tauchbad oder nach dem Abstellen der Bedüsung zunächst ziemlich langsam an den Werkzeughalter herunterrinnende Kühlmittel abzuleiten bzw. wieder aufzufangen.

Die Patentanmeldung DE 10 2005 024 766 die den nächstligenden Stand der Technik bildet beschreibt eine Kühlvorrichtung mit einem Gasstrom, der mit Flüssigkeitsträpfchen beladen ist. Die Flüssigkeit wird im Kreislauf geführt Im Hinblick auf den Gasstrom sind keine Vorkehrungen vorgesehen.

Die Gebrauchsmusterschrift DE 20 2006 002 270 U1 beschreibt eine Kühlung mit einer Mischung aus Luft und Wasser, wobei wiederum im Hinblick auf den Luftstrom keine besonderen Vorkehrungen getroffen sind.

Angesichts dessen liegt der Erfindung die Aufgabe zugrunde, eine Kühlvorrichtung zu schaffen, die dazu in der Lage ist, eine deutlich schnellere Abkühlung zu bewirken, als diejenigen Kühlvorrichtungen, denen das Prinzip der Luftkühlung zugrunde liegt, bei der jedoch, anderes als bei den bisher bekannten, eine Wasserkühlung einsetzenden Kühlvorrichtungen, nicht die Gefahr einer zu schnellen bzw. einer ungleichmäßigen Abkühlung besteht. Desweiteren ist es auch die Aufgabe der Erfindung, weder die Umgebung,noch die Werkstatträume, in der die Kühlanlage betrieben wird, durch den Trägergasstrom und/oder das Kühlmittel zu belasten. Vorzugsweise soll die erfindungsgemäße Kühlvorrichtung diese Aufgabe gerade auch dort lösen, wo Schrumpffutter abzukühlen sind.

Diese Aufgabe wird durch eine Kühlvorrichtung mit den Merkmalen des Anspruchs 1, durch ein Verfahren mit den Merkmalen des Anspruchs 16 und durch eine Verwendung mit den Merkmalen des Anspruchs 17 gelöst.

Die Vorrichtung umfasst erfindungsgemäß eine Pumpe, mit Hilfe derer sie einen Trägergasstrom erzeugt. Dieser wird mit einem flüssigen Kühlmedium befrachtet, so dass ein volumenmäßig überwiegend aus dem Trägergas bestehender Kühlmittelstrom entsteht, dessen Kühlwirkung maßgeblich durch das flüssige Kühlmedium bestimmt wird, welches von dem Trägergasstrom transportiert wird.

Der Erfindung liegt also der Gedanke zugrunde, das flüssige Kühlmedium nicht weitgehend unverdünnt zu verwenden, wie das bei der Tauch- oder Schwallkühlung der Fall ist, sondern in vergleichsweise feine Tröpfchen aufzulösen, damit quasi zu verdünnen und diese Tröpfen dann mittels eines Trägergases zu transportieren. Hierdurch besteht die Möglichkeit, die Tröpfchen mit erhöhter Geschwindigkeit an dem zu kühlenden Gegenstand vorbeizuführen - so, dass sich eine schnelle aber doch nicht zu schroffe Abkühlung ergibt, die zudem ausgesprochen gleichmäßig ist.

Dabei hat der Transport mittels des (idealerweise in einer geschlossenen Schleife zirkulierenden) Trägergases den Vorteil, dass vorzugsweise wesentlich feinere Tröpfchen zum Einsatz kommen können, als beim bekannten Bespritzen oder Besprühen, das - sofern überhaupt eine Auflösung in einzelne Tropfen erfolgt - auf eine vergleichsweise große Tropfengröße angewiesen ist, da die einzelnen Tropfen nur so hinreichend stark beschleunigt werden können, um den Weg bis zu dem zu kühlenden Gegenstand überwinden zu können.

Dabei ist es erfindungsgemäß meistens so, dass es das fein verteilte flüssige Kühlmedium ist, welches den überwiegenden Teil der abzuführenden Wärmeenergie aufnimmt.

Ein Vorteil der erfindungsgemäßen Vorgehensweise ist dabei der, dass die Tröpfchen so gewählt werden können, dass sich auch dann; wenn die Tröpfchen beim Auftreffen auf die Oberfläche des zu kühlenden Gegenstandes spontan verdampfen, keine ungleichmäßige Kühlung ergibt - anders als bei einer Tauch- oder Schwallkühlung, wo das verdampfende Kühlmedium mehr der minder große lokale Dampfblasen bildet, die den Wärmeübergang zeitweilig behindern und so die Gefahr von Ungleichmäßigkeiten schaffen. Zudem wird entstehender Dampf bei der erfindungsgemäßen Verfahrensweise sofort von dem Trägergasstrom mitgerissen und abgeführt. Letzteres ist auch bei der Verwendung von Wasser mit Korrosionsinhibitoren wichtig, da diese gesundheitlich bedenkliche Dämpfe bilden.

Idealerweise ist die Zerstäubung oder die Vernebelung des Kühlmediums so fein, dass dessen Tröpfchen durch den Trägergasstrom nicht nur in die Kühlkammer hinein transportiert werden, sondern im Wesentlichen auch wieder aus ihr heraus transportiert werden. Auf diese Art und Weise wird der zu kühlende Gegenstand nicht übermäßig benetzt, sondern kommt stetig mit neuen, frischen Tröpfchen in Kontakt. Die Tröpfchen sind zumindest überwiegend so fein, dass ihre Bewegung nicht wesentlich durch die Schwerkraft oder die Kräfte, die die Oberfläche des zu kühlenden Gegenstandes auf sie ausübt, bestimmt wird, sondern maßgeblich durch die Kräfte, die der Trägergasstrom auf sie ausübt.

Auf diese Art und Weise lässt sich die Intensität der Kühlung recht gut beeinflussen, indem kurzfristig die Geschwindigkeit des Trägergasstroms variiert wird und/oder die Menge des dem Trägergasstrom zugegeben flüssigen Kühlmediums.

Zugleich erlaubt es der Umstand, dass der Kühlmittelstrom mit erhöhter Geschwindigkeit fließt und volumenmäßig überwiegend aus dem Trägergas und nicht aus dem flüssigen Kühlmedium besteht, den Kühlmittelstrom ohne besonderen Aufwand zu formen, beispielsweise auf den abzukühlenden Gegenstand zu fokussieren und/oder ihm einen Drall zu verleihen.

Auch dies unterscheidet die erfindungsgemäße Kühlvorrichtung vom Stand der Technik.

Ein generelles, allgemein gültiges Maß für die Größe der Kühlmitteltröpfchen lässt sich nur schwer angeben, da ihre ideale Größe stark von den individuellen Verhältnissen abhängt.

Als grober Anhaltspunkt lässt sich sagen, dass die Kühlmitteltröpfchen in den meisten Fällen einen Durchmesser haben sollten, der wenigstens kleiner als ein 1 mm oder, deutlich besser, zumindest überwiegend kleiner als 0,5 mm ist. Im Idealfall sind die Kühlmitteltröpfchen zumindest überwiegend kleiner als 0,1 mm oder so fein zerstäubt, dass sie zusammen mit dem Trägergas einen echten Nebel bilden. Vorzugsweise erhalten die Kühlmitteltröpfchen schon im Zuge ihrer anfänglichen Zerstäubung bzw. Vernebelung die genannten Durchmesser. Im Prinzip reicht es jedoch, wenn erst im Zuge der weiteren Verwirbelung (aber im Wesentlichen vor dem Auftreffen auf den zu kühlenden Gegenstand) Kühlmitteltröpfchen entstehen, die die genannten Durchmesser aufweisen.

Die Erfindung zeichnet sich dadurch aus, dass der Trägergasstrom in einem im Wesentlichen geschlossenen Kreislauf geführt wird. Dies hat zur Folge, dass weder die Umgebung noch die werkstatträume, in der die Kühlanlage betrieben wird, durch den Trägergasstrom und/oder das Kühlmittel belastet werden. Letzteres ist auch dann von Bedeutung, wenn als Trägergasstrom Luft und als Kühlmedium Wasser verwendet werden, da weder eine unerwünschte Luftbewegung erzeugt wird, noch übermäßig Wasserdampf im Gebäude freigesetzt wird.

Idealerweise wird die Kühlkammer von dem Kühlmittelstrom im Querstrom durchströmt, also entweder von links nach rechts oder von unten nach oben. Eine solche Durchströmung im Querstrom sichert eine vollständige und sehr gleichmäßige Durchspülung der Kühlkammer und verhindert die momentane Bildung von "Wärmenestern".

Optimal ist dabei, wenn der Querstrom zugleich als Fallstrom geführt wird, das heißt wenn die Kühlkammer in vertikaler Richtung von oben nach unten durchströmt wird. Denn bei einer solchen Durchströmung im Fallstrom wird am besten verhindert, dass sich die Schwerkraft ungünstig auf die Verteilung der aus dem Kühlmedium bestehenden Tröpfchen in dem Trägergasstrom auswirkt, die gemeinsam das Kühlmittel bilden.

Im Rahmen eines bevorzugten Ausführungsbeispiels ist vorgesehen, dass die Kühlvorrichtung stromabwärts des zu kühlenden Gegenstandes einen Kühler aufweist. Ein solcher Kühler setzt nicht nur die Temperatur des Kühlmittelstroms herab und gewährleistet damit bei dessen nächstem Umlauf eine effizientere Kühlung. Vielmehr ist es im Regelfall so, dass der Kühler auch dazu beiträgt das Kühlmedium, insbesondere das zu diesem Zweck verwendete Wasser, wieder von dem Trägergasstrom abzutrennen. Auf diese Art und Weise hat man auf der Druckseite des Gebläses einen relativ "trocknen" Trägergasstrom zur Verfügung. Das eröffnet die Möglichkeit, dem Trägergasstrom bei jedem Umlauf erneut eine gezielte Menge an Kühlmedium zuzudosieren und so den Abkühlvorgang gezielt zu beeinflussen.

Vorzugsweise ist es so, dass die Kühlvorrichtung eine Pumpe in Gestalt eines Radialgebläses aufweist und einen Kühler, der entweder- ganz oder teilweise im Zentrum des Läufers des Radialgebläses untergebracht ist oder in axialer Richtung vor dem Zentrum des Läufers des Radialgebläses. Eine solche Unterbringung des Kühlers ist nicht nur platzsparend, sie erleichtert es zudem, das Kühlmedium aus dem Trägergasstrom abzuscheiden. Denn das Kühlmedium, welches durch die Wirkung des Kühlers und/oder durch die Zentrifugalkraft, die der Läufer des Radialgebläses auf den Trägergasstrom ausübt, abgeschieden worden ist, kann ganz einfach mit Hilfe des entsprechend gestalteten Mantels des Radialgebläses aufgefangen und dann mittels einer Pumpe abgezogen werden.

Bevorzugt weist die Kühlvorrichtung einen Injektor auf, der stromaufwärts der Kühlkammer angeordnet ist und den Trägergasstrom dort mit dem flüssigen Kühlmedium befrachtet. Das Einbringen des Kühlmediums in den Trägergasstrom in hinreichender Entfernung stromaufwärts der Kühlkammer hat den Vorteil, dass der Trägergasstrom und das Kühlmedium hinreichend Gelegenheit haben, sich intensiv miteinander zu vermischen, bevor sie die Kühlkammer erreichen. Auf diese Art und Weise wird eine besonders gleichmäßige Kühlung sichergestellt - was insbesondere zu Beginn eines Kühlzyklus an einem "frisch" in die Kühlkammer eingebrachten Gegenstand von Bedeutung ist, solange der zu kühlende Gegenstand bzw. das zu kühlende Schrumpffutter noch sehr heiß ist und daher empfindlich auf eine ungleichmäßige Kühlung reagiert.

Anhand der bereits oben gemachten Ausführungen zum Fallstrom leuchtet dabei ohne Weiteres ein, dass eine Befrachtung des Trägergasstroms mit dem Kühlmedium in jenem Bereich optimal ist, in dem der Trägergasstrom im Wesentlichen bereits als Fallstrom geführt wird.

Idealerweise ist zwischen dem Injektor und der Kühlkammer eine erste Leiteinrichtung angeordnet. Diese ist so gestaltet, dass sie den Kühlmittelstrom verwirbelt, bevor der Kühlmittelstrom die Kühlkammer erreicht. Dies trägt dazu bei, das Kühlmedium optimal und möglichst gleichmäßig zu verteilen.

Vorzugsweise verleiht die erste Leiteinrichtung dem Kühlmittelstrom einen Drall. Trifft der Kühlmittelstrom mit einem Drall auf den zu kühlenden Gegenstand, dann ist die Gefahr kleiner, dass es zu einer ungleichmäßigen Kühlwirkung kommt, etwa weil der zu kühlende Gegenstand irgendwelche Vorsprünge aufweist, die auf ihrer Lee-Seite eine Abschattung bewirken und damit eine ungleichmäßige Kühlung verursachen. Dies gilt insbesondere bei der Kühlung von Schrumpffuttern, die immer dann, wenn ihre Drehachse (idealerweise) parallel zur Hauptströmungsrichtung des Kühlmittels ausgerichtet ist, Nuten bzw. Kragen-Abschnitte aufweisen, welche sich quer zur Hauptströmungsrichtung erstrecken und dadurch ein den in Strömungsrichtung hinter ihnen liegenden Lee-Bereich abschattendes Hindernis für den Kühlmittelstrom darstellen.

Idealerweise weist die Kühlvorrichtung eine zweite Leiteinrichtung auf. Diese zweite Leiteinrichtung ist vorzugsweise als Konzentrator oder Düse ausgestaltet, der bzw. die den Kühlmittelstrom formt und insbesondere auf den zu kühlenden Gegenstand fokussiert bzw. gezielt auf den zu kühlenden Gegenstand richtet. Hierdurch kann eine optimale Anströmung des zu kühlenden Gegenstandes bewerkstelligt werden. Gegebenenfalls wird es hierdurch möglich, den benötigten Kühlmittelstrom etwas geringer zu halten, da bereits mit einem kleineren Kühlmittelstrom das gewünschte Ergebnis erreicht werden kann.

Vorzugsweise ist diese zweite Leiteinrichtung verstellbar. Entweder ist sie so gestaltet, dass zu diesem Zweck ihr gesamter Strömungsquerschnitt verstellbar ist, zumindest ist sie jedoch so gestaltet, dass ihr Austrittsquerschnitt verstellbar ist. Auf diese Art und Weise wird es möglich, den Kühlmittelstrom individuell an die Maße jedes zu kühlenden Gegenstandes anzupassen, so dass beispielsweise kleine Schrumpffutter genauso effektiv gekühlt werden können, wie große Schrumpffutter.

Im Zuge einer optimalen Ausgestaltung der Kühlvorrichtung ist vorgesehen, dass die Kühlvorrichtung eine dritte Leiteinrichtung aufweist, die vorzugsweise ebenfalls verstellbar ausgestaltet ist. Sofern die zu kühlenden Gegenstände Schrumpffutter sind, ist diese dritte Leiteinrichtung zweckmäßigerweise im Bereich des freien Endes der zu kühlenden Hülsenpartie des Schrumpffutters angeordnet. In der überwiegenden Zahl der Fälle befindet sie sich also (in Strömungsrichtung gesehen) entweder im Wesentlichen auf gleicher Höhe mit dem freien Ende der zu kühlenden Hülsenpartie bzw. etwas dahinter oder etwa 1 cm bis 5 cm vor dem freien Ende der zu kühlenden Hülsenpartie.

Um diese Position auch bei entlang ihrer Drehachse unterschiedlich langen Schrumpffuttern einhalten zu können, ist die dritte Leiteinrichtung vorzugsweise in und entgegen der Hauptströmungsrichtung verstellbar.

Dabei ist es ideal, wenn die dritte Leiteinrichtung auch in einer Richtung normal zur Hauptströmungsrichtung verstellt werden kann. Auf diese Art und Weise kann die dritte Leiteinrichtung mehr oder weniger weit in den Kühlmittelstrom hineingefahren werden, so dass sie Einfluss auf den in ihrem Bereich freibleibenden Strömungsquerschnitt nimmt und damit den Staudruck und ggf. auch die lokal auftretende Strömungsgeschwindigkeit beeinflusst.

Schließlich ist es in vielen Fällen sinnvoll, die dritte Leiteinrichtung so auszuführen, dass ihr Anströmwinkel verändert werden kann und die dritte Leiteinrichtung auf diese Art und Weise dem Kühlmittelstrom einen stärkeren oder schwächeren Drall vermittelt.

Weitere Vorteile, Ausgestaltungsmöglichkeiten und Wirkungsweisen ergeben sich aus der nachfolgenden Beschreibung zweier Ausführungsbeispiele für die Erfindung.
- Figur 1: zeigt eine teilweise geschnittene Seitenansicht eines als separate Station im Anschluss an ein nicht gezeigtes Schrumpfgerät ausgeführtes, erfindungsgemäßes Kühlgerät (erste Ausführungsform).
- Figur 2: zeigt eine zweite Ausführungsform beschickt mit einem Schrumpffutter im Seitschnitt.
- Figur 3: zeigt die Ausführungsform gemäß Fig. 2 schräg von unten gesehen.
- Figur 4: zeigt die Ausführungsform gemäß Fig. 2 von unten gesehen.

Das erfindungsgemäße, durch das nachfolgend beschriebene Ausführungsbeispiel illustrierte Kühlgerät ist baulich speziell zum Einsatz als Kühlgerät für sich der Schrumpftechnologie bedienende Werkzeughalter ausgelegt und spielt gerade auf diesem speziellen technologischen Gebiet, auf dem es schon mannigfaltige Versuche gegeben hat, eine möglichst schonende und doch schnelle Abkühlung zu bewerkstelligen, seine Stärken überlegen aus. Es kann jedoch darüber hinaus bei entsprechender Auslegung auch anderweitig überall dort eingesetzt werden, wo eine sehr gleichmäßige, gut steuerbare und schnelle Abkühlung von Gegenständen bzw. durch Schrumpfen gefügten Gegenständen und insbesondere Werkzeugen realisiert werden muss.

Das erfindungsgemäße Kühlgerät kann entweder ein separates, nur der Kühlung dienendes Gerät sein, das einem Schrumpfgerät zur Seite gestellt bzw. "nachgeschaltet" wird. Ein solches Gerät wird im Rahmen des nachfolgenden Ausführungsbeispiels beschrieben. Stattdessen kann es aber auch ein Kombigerät sein, in das bereits ein Schrumpfgerät integriert ist, so dass mit ein- und demselben Gerät erhitzt, ein- und ausgeschrumpft sowie gekühlt werden kann.

Schrumpfgeräte als solche sind bekannt. Mit ihrer Hilfe werden die Schäfte insbesondere von für eine Rotation mit hoher Drehzahl vorgesehenen Werkzeugen in den Hülsenabschnitt eines entsprechend gestalteten Werkzeughalters ein- und ausgeschrumpft. Zum Zwecke des Einschrumpfens wird der hülsenabschnitt (vorzugsweise mittels einer ihn umschließenden Induktionsspule) erwärmt, so dass der Werkzeugschaft in die sich dadurch vergrößernde Aufnahmeöffnung des Hülsenabschnitts eingesteckt werden kann. Der Außendurchmesser des Werkzeugschafts ist etwas größer als der Nenndurchmesser der Aufnahmeöffnung, so dass das Werkzeug nach dem Abkühlen des Hülsenabschnitts im Presssitz verdrehfest und mit ausgezeichneter Zentrizität in dem Werkzeughalter gehalten ist.

Ein Paradebeispiel für ein solches Schrumpfgerät beschreiben die deutsche Patentanmeldung DE 101 02 710 A1 sowie die internationale Patentanmeldung WO 2001 089 758 A1. Sofern das erfindungsgemäße Kühlgerät Teil eines Kombigerätes ist, wird der das Schrumpfgerät darstellende Teil vorzugsweise ganz oder teilweise so konstruiert sein, wie von diesen Patentanmeldungen beschrieben. Natürlich funktioniert die erfindungsgemäße Kühlung auch in Verbindung mit einer vorherigen Erhitzung durch Heißluft, Flamme, Kontaktheizung und dergl.

Dies vorweggeschickt kann zur konkreten Beschreibung des durch die Figur illustrierten Ausführungsbeispiels übergegangen werden.

Ein wesentlicher Teil des Kühlgeräts 1 ist die Pumpe 2, die hier als Radialgebläse ausgeführt ist. Die Verwendung eines Radialgebläses ist besonders zweckmäßig, da aus einem Radialgebläse das im Inneren des Gebläses kondensierte Kühlmedium sehr einfach abgeführt werden kann. Dem Prinzip nach ist aber auch die Verwendung eines anderweitigen Gebläses oder einer auf einem ganz anderen Prinzip beruhenden Pumpe denkbar.

Das Radialgebläse erzeugt einen kräftigen Luftstrom, der im Falle des geschilderten Ausführungsbeispiels als Trägergasstrom 23 dient. Die Pumpleistung des Gebläses ist relativ hoch, vorzugsweise regelbar oder steuerbar und liegt meist zwischen 5 m³/min und 100 m³/min besser 10 m³/min und 100 m³/min. Die mittlere Strömungsgeschwindigkeit des Trägergasstroms im Nahbereich hinter der Pumpe liegt vorzugsweise zwischen 6 m/s und 36 m/s.

Der Trägergasstrom 23 wird in einem im Wesentlichen in sich geschlossenen Kreislauf geführt, wobei gerade bei der Verwendung von Luft als Trägergasstrom im Einzelfall kleinere Leckageverluste unbedenklich sein können. Zu diesem Zweck ist die Druckseite 4 des Gebläses über einen Trägergaskanal 3 mit der Saugseite 5 des Gebläses verbunden. Der Trägergaskanal 3 wird im vorliegenden Ausführungsbeispiel durch ein Rundrohr gebildet, das vorzugsweise einen Innendurchmesser zwischen 20 cm und 50 cm aufweist. Die Verwendung eines Rundrohrs ist jedoch nicht zwingend, es kann theoretisch auch ein Flachkanal oder ein Kanal mit einem polygonförmigen Querschnitt verwendet werden.

Der Trägergaskanal 3 ist im vorliegenden Ausführungsbeispiel so gestaltet, dass der Trägergasstrom auf der Druckseite der Pumpe zunächst in vertikal aufwärtiger Richtung geführt wird, dann über einen Rohrkrümmer um 180° umgelenkt wird, um nun als Fallstrom in vertikal abwärtiger Richtung geführt zu werden.

Vorzugsweise im oberen Teil des Fallstrom-Bereichs ist ein Injektor 7 vorgesehen, der den Trägergasstrom 23 mit einem flüssigen Kühlmedium befrachtet, so dass der Trägergasstrom 23 und das ihm zugegebene oder zudosierte Kühlmedium 24 nun gemeinsam einen Kühlmittelstrom 23, 24 bilden.

Als Kühlmedium dient im vorliegenden Fall Wasser, denn Wasser ist kostengünstig, einfach zu handhaben und als solches physiologisch unbedenklich. Selbstverständlich können dem Wasser Korrosionsinhibitoren oder andere Additive zugesetzt werden, etwa solche, die die Benetzung des abzukühlenden Gegenstandes beeinflussen oder die Tropfenbildung. Das gilt natürlich auch bei Verwendung anderer flüssiger Kühlmedien, als Wasser.

Der Injektor 7 ist so gestaltet, dass er das Kühlmedium 24, mit dem er den Trägergasstrom 23 befrachtet, fein zerstäubt oder vernebelt.

Im Falle des hier geschilderten Ausführungsbeispiels besteht der Injektor 7 aus einem Zerstäuber mit vorzugsweise mehreren Zerstäuberdüsen, die das flüssige Kühlmedium 24 so fein zerstäuben, dass es den Trägergasstrom 23 in Form von Tröpfchen befrachtet, die im Wesentlichen einen mittleren Durchmesser aufweisen, der kleiner oder gleich 0,05 mm beträgt. Vorzugsweise wird der Injektor durch eine Dosierpumpe im weiteren Sinne gespeist, so dass die Menge an Kühlmedium, mit der er den Trägergasstrom momentan befrachtet, gezielt beeinflusst werden kann.

Allgemein ist festzuhalten, dass sich der Injektor der unterschiedlichsten Prinzipien bedienen kann, um eine hinreichende Vernebelung bzw. ein hinreichend feines Einsprühen des Kühlmediums zu erreichen. Ideal ist eine Pumpzerstäubung, ähnlich wie sie von Einspritzpumpen her bekannt ist. Dies vor allem deshalb, weil sich eine solche Pumpzerstäubung in weiterem Umfang variieren lässt und somit die unterschiedlichsten Möglichkeiten zur Beeinflussung des Kühlmittelstroms bietet.

Stattdessen kann sehr gut auch eine hinreichend leistungsfähige piezoelektronische oder durch Ultraschall induzierte Vernebelung eingesetzt werden, vom Prinzip ähnlich, wie sie von Zimmerbrunnen her bekannt ist, die zum Zwecke der Raumluftbefeuchtung eingesetzt werden.

Alternativ wäre es schließlich unter bestimmten Umständen auch denkbar, das Venturi-Prinzip zum Zwecke der Zerstäubung einzusetzen.

Es versteht sich von selbst, dass der Begriff Injektor nicht besagt, dass nur an einer einzigen Stelle Kühlmedium 24 in den Trägergasstrom 23 eingebracht werden kann oder eine einzige Einrichtung zur Zerstäubung oder Vernebelung eingesetzt werden muss.

Um eine optimale Verteilung des flüssigen Kühlmediums zu erreichen ist der Injektor 7 vorzugsweise mit einem Abstand von mehr als 25 cm, besser mehr als 40 cm stromaufwärts der Kühlkammer 6 angeordnet.

Vorzugsweise im unteren Teil des Fallstrom-Bereichs ist im Trägergaskanal 3 eine im Wesentlichen leckagefrei verschließbare Kühlkammer 6 vorgesehen, in die das zu kühlende Bauteil eingebracht und in der es gehalten wird. Als Kühlkammer 6 wird hier der eigentliche Nutzbereich bezeichnet, in dem eine Unterbrechung in den Trägergaskanal 3 eingearbeitet ist, die es einer Zuführeinrichtung ermöglicht, einen zu kühlenden Gegenstand bzw. das zu kühlende Schrumpffutter in den Trägergaskanal 3 einzufahren bzw. einzuschwenken und dort zu halten.

Die Zuführeinrichtung 15 ist im vorliegenden Fall als Drehteller ausgebildet, der mit mehreren entsprechend gestalteten Werkzeugaufnahmen 16 versehen ist, an welchen die abzukühlenden Schrumpffutter 18 haltend befestigt werden können. Auf den Drehteller werden die abzukühlenden Schrumpffutter 18 nacheinander aufgesetzt. Der Drehteller schleust sie schrittweise nacheinander durch die Kühlvorrichtung, in dem er jeweils um den entsprechenden Winkel weiterdreht.

Die besagte Unterbrechung kann bei dem beschriebenen Ausführungsbeispiel dadurch geschlossen werden, dass eine mit entsprechenden Dichtungen versehene Schiebemuffe 19 manuell oder elektromotorisch von ihrer oberen, gelüfteten Position in ihre untere Position geschoben wird, die die Schließposition darstellt. In ihrer Schließposition dichtet die Schiebemuffe 19 gegenüber den entsprechend geformten Rändern des Drehtellers ab, der hier die Zuführeinrichtung 15 bildet. Der Drehteller wiederum dichtet mit seiner Unterseite gegenüber der Tischplatte 20 ab, entweder mit Hilfe einer geeigneten Berührungsdichtung oder auch mit Hilfe einer entsprechend klein bemessenen Spaltdichtung.

An die Kühlkammer 6 schließt sich ein weiterer Abschnitt des Trägergaskanals 3 an, der schließlich in eine Lufthaube 21 mündet. Diese liegt in axialer Richtung gesehen vor dem Läufer 22 des Radialgebläse, das hier die Pumpe 2 bildet. Diese Lufthaube ist, soweit sie nicht in das Innere des Läufers 22 hineinragt, als eine Art Kasten ausgeführt, in dem sich ein Kühler 8 befindet. Der Kühler 8 wird durch ein Kühlaggregat 9 versorgt, welches ihn mit Kältemittel speist. Durch den Kühler 8 wird der erhitze Kühlmittelstrom 23, 24 rückgekühlt und eventuell beim Kontakt mit dem zu kühlenden Gegenstand verdampftes Kühlmedium 29 wieder kondensiert.

Der Läufer 22 des Radialgebläses kann im vorliegenden Fall so gestaltet sein, dass er Fliehkräfte erzeugt, die zumindest einen Teil der Tröpfchen, die der von der Kühlkammer 6 zurückkommende Trägergasstrom 23 noch mit sich führt, aus dem Trägergasstrom abscheiden sowie Späne und dergleichen. Selbstverständlich ist es gegebenenfalls auch möglich nur einmalig Kühlmedium 24 zuzugeben und dies dann zumindest so lange im Trägergasstrom 23 zu belassen, bis der Abkühlvorgang vollständig beendet ist.

Auskondensierte oder anderweitig ausgefallene Tröpfchen sammeln sich im Mantel 10 der als Gebläse ausgeführten Pumpe 2 und werden von dort mittels der Pumpe 11 für das Kühlmedium abgezogen, um das Kühlmedium 24 wieder dem Injektor 7 zuführen zu können.

Statt oder zusätzlich zu dem entsprechend gestalteten Läufer 22 des Radialgebläses kann auch ein Fliehkraftabscheider vorgesehen sein, der die Wiederabscheidung der Tröpfchen aus dem Trägergasstrom bewirkt, beispielsweise in Gestalt eines Zyklonabscheiders (nicht gezeigt). Ein solcher Fliehkraftabschneider kann zugleich auch dazu eingesetzt werden, um zunächst mitgerissene Späne und Partikeln abzutrennen.

Näherer Erläuterung bedürfen nun noch die verschiedenen Leiteinrichtungen, die innerhalb des Trägergaskanals 3 vorgesehen sind.

Der Kühlmittelstrom passiert stromabwärts des Injektors 7, noch bevor er die Kühlkammer 6 erreicht, die erste Leiteinrichtung 12. Diese erste Leiteinrichtung 12 kann beispielsweise als mehr oder minder ausgeprägtes Drallblech ausgestaltet sein, welches von den Wänden des Trägergaskanals 3 aus in den Kühlmittelstrom hineinragt und dem Kühlmittelstrom 23, 24 einen Drall aufzwingt, also den Kühlmittelstrom in etwa schraubenförmig verwirbelt. Auf diese Art und Weise vermischen sich der Trägergasstrom 23 und das ihn befrachtende Kühlmedium 24 sehr intensiv, so dass sich ein sehr gleichmäßiger Kühlmittelstrom 23, 24 ergibt.

Vorzugsweise stromabwärts der ersten Leiteinrichtung ist eine zweite Leiteinrichtung 13 vorgesehen. Diese zweite Leiteinrichtung besteht hier, wie man anhand der Figur nachvollziehen kann, aus einer Reihe irisblendenartig zusammengelegter Plättchen, deren Fuß jeweils auf der stromaufwärtigen Seite schwenkbar angelenkt ist. Man kann sie also als Irisblende bezeichnen.

Diese Plättchen bilden eine Art Düse, die einen in etwa kegelstumpfförmigen Strömungsquerschnitt einschließt. Schwenkt man die Metallplättchen in radial einwärtige Richtung, dann wird der zwischen ihnen noch zur Verfügung stehende Strömungsquerschnitt immer kleiner. Gleiches gilt natürlich auch für den Austrittsquerschnitt der Düse. Es leuchtet ein, dass eine solche Leiteinrichtung 13 in Gestalt einer Düse gut dazu geeignet ist, um den Kühlmittelstrom 23, 24 so zu formen, dass er den zu kühlenden Gegenstand bzw. das zu kühlende Spannfutter unter Berücksichtigung von dessen individueller Kontur und Größe optimal umströmt.

Wie anhand der Figur zu erkennen ist, kann die zweite Leiteinrichtung, gleich, ob sie verstellbar ist oder nicht, mittels einer entsprechenden Leitung 25 mit der Versorgung für das Kühlmedium 24 verbunden sein. Sie ist dann so ausgestattet, dass sie den Kühlmittelstrom (23, 24) durchgängig oder bei Bedarf zusätzlich mit (gegebenenfalls zusätzlichem) Kühlmedium befrachtet.

Selbstverständlich ist es möglich, diese zweite Leiteinrichtung 13 nicht nur manuell sondern auch elektromotorisch zu betätigen. Dies macht insbesondere dann Sinn, wenn der Kühlvorrichtung 1 Abmessungen des jeweils zu kühlenden Gegenstandes bekannt sind, weil diese bereits von anderer Stelle her eingespeist numerisch zur Verfügung stehen oder weil das Kühlgerät mit einem entsprechenden Erkennungssystem ausgestattet ist. Die zweite Leiteinrichtung 13 kann dann automatisch so eingestellt werden, dass sie für den jeweils zu kühlenden Gegenstand optimal eingerichtet ist.

Wie man sieht, tritt der Kühlmittelstrom 23, 24 durch die zweite Leiteinrichtung 13 in die Kühlkammer 6 ein.

Dort trifft der Kühlmittelstrom auf die dritte Leiteinrichtung 14. Wie man sieht, ist die Leiteinrichtung bei diesem Ausführungsbeispiel genau so angebracht bzw. eingestellt, dass sie im Bereich des freien Endes der Hülsenpartie des hier zu kühlenden Schrumpffutters liegt. Diese Leiteinrichtung 14 zwingt den gesamten Kühlmittelstrom in einen wandnahen Bereich des zu kühlenden Schrumpffutters 18. Wie man sieht, erstreckt sich die dritte Leiteinrichtung 14 hier über einen Bereich, der etwa 7,5 cm oberhalb und unterhalb des freien Endes der Hülsenpartie des Schrumpffutters liegt. Im vorliegenden Fall bildet diese dritte Leiteinrichtung eine Engstelle, vor der sich der Kühlmittelstrom staut, so dass dort ein Staudruck entsteht und hinter der sich der Kühlmittelstromschlag entspannt. Bei entsprechend sorgfältiger Auslegung der Strömungsverhältnisse ist diese Entspannung des Kühlmittelstroms im Einzelfall so stark, dass der Kühlmittelstrom die Tendenz halt, aufgrund der Entspannung eine merkliche zusätzliche Wärmemenge aufzunehmen. Dies verbessert natürlich die Kühlfähigkeit des Kühlmittelstroms. Die dritte Leiteinrichtung 14 beschränkt sich nicht darauf, eine Art Blende zu bilden. Vielmehr bilden sich auch entsprechend ausgebildete Schrägflächen, die dem Kühlmittelstrom einen Drall aufzwingen, so dass er in einer schraubenförmig wirbelnden Bewegung um das hier zu kühlende Schrumpffutter herumläuft.

Eine oder mehrere der soeben beschriebenen Leiteinrichtungen können optional so ausgelegt sein, dass sie Wirbel oder einen hinreichend steilen lokalen Druckabfall erzeugen, der oder die dazu führen, dass zumindest ein spürbarer Teil der den Trägergasstrom befrachtenden Kühlmitteltröpfchen "zerrissen" werden bzw. sich durch anderweitige Effekte in noch feinere Tröpfchen aufteilen und dadurch noch gleichmäßiger in dem Trägergasstrom verteilen, so dass ein Kühlmittelstrom mit gesteigerter Homogenität entsteht.

Die erfindungsgemäße Kühlvorrichtung weist im Regelfall eine Steuerung oder Regelung (nachfolgend pauschal "Steuerung") auf, die zweckmäßigerweise mit einem Temperatursensor korrespondiert, der die momentane Oberflächentemperatur des abzukühlenden Gegenstandes misst.

Diese Steuerung ist zumeist so ausgelegt, dass sie auf der Kühlvorrichtung unterschiedliche Abkühlprofile abbilden kann. Dabei ist der Einsatz eines Temperatursensors nützlich aber nicht zwingend, denn die Steuerung kann ggf. auch unabhängig vom Istzustand arbeiten, beispielsweise indem ein in Abhängigkeit von der anderweitig bekannten Geometrie vorgewähltes Zeitprofil abgearbeitet wird, welches auf der Grundlage empirischer Erfahrungswerte das gewünschte Abkühlprofil abbildet, das im Regelfall aus verschiedenen Phasen besteht.

Es bietet sich an,in einer ersten optionalen Phase, in der der abzukühlenden Gegenatand - beispielsweise in Gestalt eines schrumpffutters noch sehr heiß ist, eine nur moderate Abkühlung vorzunehmen. Zu diesem Zweck wird der Trägergasstrom zunächst nur mit einer geringeren Menge flüssigen Kühlmediums befrachtet und/oder der Trägergasstrom wird nur mit reduzierter Strömungsgeschwindigkeit geführt.

Sobald eine den unterkritischen Bereich markierende erste Grenztemperatur erreicht oder unterschritten ist, kann sich eine weitere Phase anschließen, in der die Abkühlgeschwindigkeit höher liegt, indem die Zugabemenge des flüssigen Kühlmediums und/oder die Strömungsgeschwindigkeit gesteigert wird.

Dem kann sich eine dritte Phase anschließen: Sobald oder sogar schon rechtzeitig bevor eine den als "abgekühlt" definierten Temperaturbereich markierende Grenztemperatur erreicht wird, wird die Kühlmittelpumpe abgestellt, so dass der abzukühlende Gegenstand von dem nun nicht mehr länger mit frischem Kühlmedium befrachteten Trägergasstrom ganz oder im Wesentlichen trocken geblasen wird. Dabei kann man sich, um Zeit zu sparen, ggf. damit begnügen, den abzukühlenden Gegenstand nur kurz (aber vorzugsweise forciert) dem mehr oder minder reinen Trägergasstrom auszusetzen, derart, dass das an ihm anhaftende Kühlmittel wenigstens soweit weggerissen wird, dass die Oberfläche des nunmehr kalten Gegenstandes zumindest nicht mehr von einem geschlossenen Flüssigkeitsfilm überzogen wird.

Die genannten drei Phasen stellen Grundbausteine dar, aus denen die individuellen Abkühlprofile zusammengestellt werden können.

Selbstverständlich ist es möglich die jeweiligen Abkühlprofile nicht fest vorzugeben, sondern parameterisiert in Abhängigkeit von der Geometrie des abzukühlenden Gegenstandes.

Ein großer Vorteil der erfindungsgemäßen Art zu Kühlen liegt gerade auch beim wiederabkühlen von Schrumpffuttern darin, dass nur eine vergleichsweise geringe Menge an Kühlwasser insgesamte zirkulierten muss, um hinreichend zu kühlen. Diese geringe Menge von meist nur 5 1 bis 10 1 wird gerade bei der Kühlung von Schrumpffuttern aufgrund ihrer Verwendung in konsequenter Tröpfchenform regelmäßig durch die vom Schrumpffutter aufgenommenen Wärme sterilisiert und ist auch aufgrund der starken Druckschwankungen beim Zerstäuben und im Trägerkanal. wenig anfällig für Pilz- und Bakterienbefall.

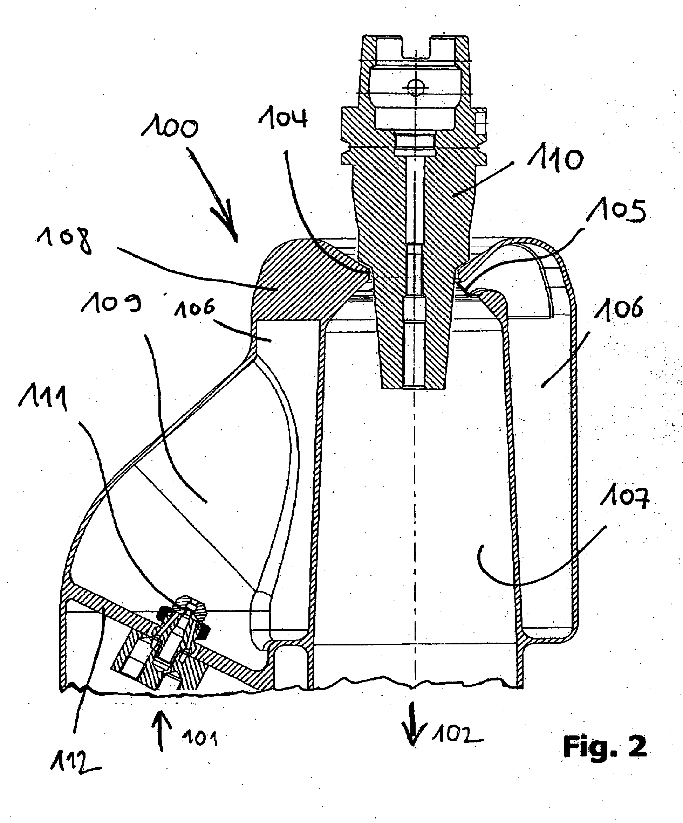

Die Fig. 2 bis 4 zeigen ein zweites Ausführungsbeispiel der Erfindung.

Dieses Ausführungsbeispiel unterscheidet sich von dem zuvor geschilderten Ausführungebeispiel dadurch, dass bei diesem Ausführungsbeispiel nicht das gesamte zu kühlende Werkstück in den Trägergaskanal eingebracht wird, so dass es vollständig vom Trägergasstrom bzw. Kühlnebel umströmt wird, auch an seinen Stellen, die eigentlich keiner Kühlung bedürfen. Stattdessen wird bei dieser Ausführungsform zumindest nur der Teil des zu kühlenden Werkstücks (auch hier vorzugsweise in Gestalt eines Werkzeugspannfutters bzw. Schrumpffutters) in den Trägergaskanal eingebracht, der wirklich gekühlt werden muss - bei einem Schrumpffutter ist das die Hülsenpartie, die den Schaft des zu spannenden Werkstücks umschließt.

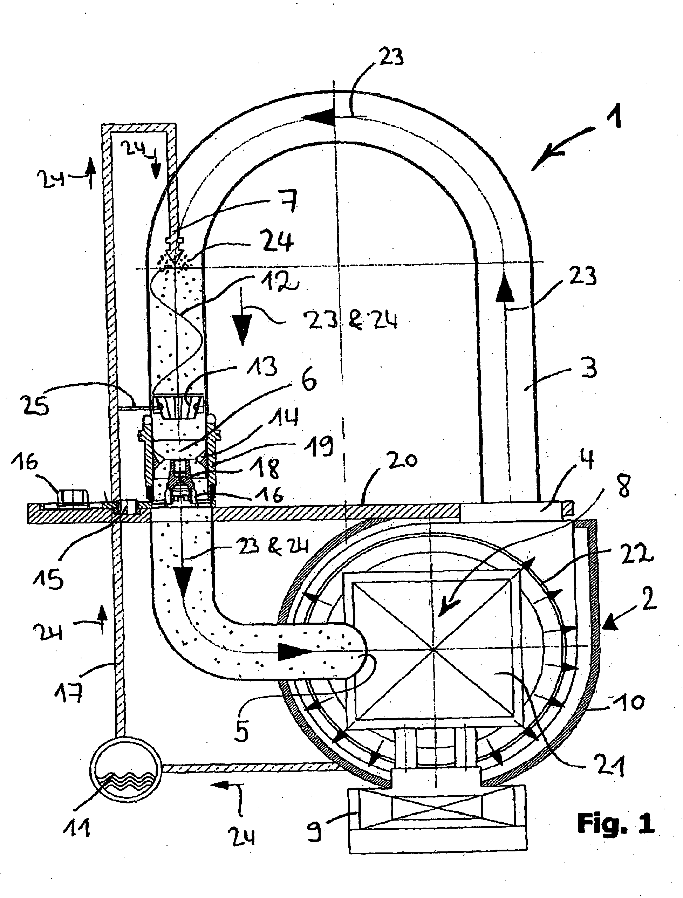

Für das zweite Ausführungsbeispiel gilt das im Zusammenhang mit den Schilderungen des ersten Ausführungsbeispiels gesagte gleichermaßen, sofern sich nicht aus der Tatsache, dass hier keine vollständige Einbringung des Werkstücks in den Trägergaskanal erfolgt, etwas anderes ergibt. Inbesondere sind alle Einrichtungen zur Zu- und Abfuhr sowie zum in Bewegung setzen und Trocknen des Trägergasstroms dieselben, wie beim ersten Ausführungsbeispiel. Es muss lediglich die Verrohrung des von Fig. 1 gezeigten Schleusenteils 100 fachüblich angepasst und an den Eingangsstutzen 101 und den Ausgangsstutzen 102 angeschlossen werden, um die von den Fig. 2 bis 4 gezeigte Ausführungsform an der von Fig. 1 gezeigte Einrichtung zur Erzeugung des Trägergasstroms betreiben zu können.

Wichtig ist, dass auch die im Zusammenhang mit dem ersten Ausführungsbeispiel gemachten Ausführungen zur Frage der Strömungsgeschwindigkeiten; des Drucks bzw. Überdrucks, zur Frage der Tröpfchengröße und des Kühlmittels, der Kühlmittelmenge sowie des Injektors für das zweite Ausführungsbeispiel gelten. Dies gilt auch für die Steuerung des Kühlgeräts und der von ihr zu "fahrenden" Abkühlprofile.

Am besten an Hand der Fig. 2 sieht man, dass das in den Trägergaskanal eingesetzte und einen Teil des Trägergaskanals bildende Schleusenteil 100 eine Einführöffnung 104 ausweist, die so gestaltet ist, dass der zu kühlende Teil des bestimmungsgemäß mit der Kühlvorrichtung zu kühlenden Werkstücks (hier die Hülsenpartie des Schrumpffutters 110) durch die Öffnung hindurch bis in den Trägergaskanal hineingeschoben werden kann, während ein nicht unmittelbar zu kühlender Teil des Werkstücks die Einführöffnung bei maximal eingeführtem Werkstücke- zumindest im Wesentlichen verschließt. Selbst wenn die Einführöffnung nicht vollständig verschlossen wird, findet nur ein geringer Austausch des Trägergases mit der Umgebungsluft statt, da der Trägergasstrom im geschlossenen Kreislauf geführt wird. Vorzugsweise ist eine hier nicht näher gezeigte Elastomerdichtung vorgesehen, an der das zu kühlende Werkstück anliegen kann,um die Einführöffnung 104 abzudichten. Stattdessen kann die Einführöffnung außenseitig umgebende Berandung auch so ausgestaltet sein, dass sie der Kontur des Werkstückabschnitts entspricht, die bestimmungsgemäß gegen diese Berandung anliegt und dadurch mit ihr eine Spaltdichtung bildet. Im Ausführungsbeispiel ist die Berandung kegelig ausgeführt und liegt dicht gegen den entsprechenden Kegelabsatz des Schrumpffutters an.

Wie man sieht ist auf der dem Inneren des Trägergaskanals zugewandten Seite der Einführöffnung unmittelbar (oder, möglich aber weniger vorteilhaft, im Abstand von weniger alls 2 cm) im Anschluss an die Einführöffnung ein den zu kühlenden Abschnitt voll oder zumindest ¾-ringförmig umgreifender Trägergasauslass 105 vorgesehen, aus dem ein Trägergasstrom austritt, der den zu kühlenden Teil des Werkstücks bestreicht. Der Trägergasauslass ist so gerichtet, dass der zu kühlende Teil des Werkstücks unter einem Winkel von < 60 Grad besser von < 45 Grad zur Werkstücklängsachse angeströmt wird. Der Trägergasauslass sorgt durch sein ringförmiges Umgreifen des zu kühlenden Teils des Werkstücks dafür, dass das Trägergas den zu kühlenden Abschnitt gleichmäßig bestreicht. Der Trägergasauslass kann in eine Anzahl (z. B. durch Stege) getrennter Mündungen aufgelöst sein, die ringförmig gruppiert angeordnet sind.

Vorzugsweise ist zumindest eine Trennwand 108 vorhanden, die den ringförmigen Trägergasauslass in Umfangsrichtung gesehen unterbricht; so, wie man das in Fig. 2 sieht.

Stromaufwärts des Trägergasauslasses ist eine Verteilerkammer 106 vorgesehen, die den an den zu kühlenden Teil des Werkstücks heranzuführenden Trägergasstrom entlang des Umfangs des zu kühlenden Werkstücks auf den gesamten Trägergasauslass verteilt

Die Verteilerkammer ist vorzugsweise zugleich als Wirbelkammer ausgestaltet, die die Vermischung von Trägergas und Kühlnebeltröpfchen intensiviert.

Der Strömungsquerschnitt, den das von der Verteilerkammer 106 in den Bereich des Trägergasauslasses fließende Trägergas zu durchfließen hat, verengt sich von der Verteilerkammer hin zum Austrittsquerschnitt des Trägergasauslasses, was dem Trägergasstrom zum Zeitpunkt seines erstmaligen Auftreffens auf das zu kühlende Werkstück eine hohe Strömungsgeschwindigkeit verleiht.

Der Gesamtschau der Fig. 2 bis 4 entnimmt man, dass Verteilerkammer 106 als eine kreisringförmige Kammer ausgestaltet ist, in die die Trägergasstrom von der Seite her über den Eingangsstutzen 102 einströmt und in deren Zentrum der den Trägergasstrom wieder vom zu kühlenden Werkstück abführende Rohrteil 107 angeordnet ist, der in den Ausgangsstutzen ausmünden. Die Verteilerkammer 106 umgibt das abführende Rohrteil. 107 nach Art eines Mantelrohrs. Die Verteilerkammer 106 umgreift das abführende Rohr auf dessen einer Stirnseite. Im Bereich dieses Übergriffs ist die Verteilerkammer 106 über den besagten Trägergasauslass 105 an das abführende Rohrteil 107 angeschlossen, so dass zwischen diesen eine Strömungsverbindung besteht. Der zu kühlende Abschnitt des Bauteils ragt in das abführende Rohrteil über dessen stirnseitige Öffnung hinein.

Der lichte Querschnitt des sich unmittelbar an den Trägergasauslass anschließende Abschnitt des abführenden Rohrteils erweitert sich, vorzugsweise kegelig. Der Winkel, mit dem diese Erweiterung in Bezug auf die Längsachse des abführenden Rohrteils erfolgt, liegt bei vorzugsweise > 25 und < 60 Grad, idealerweise bei etwa 45. Grad.

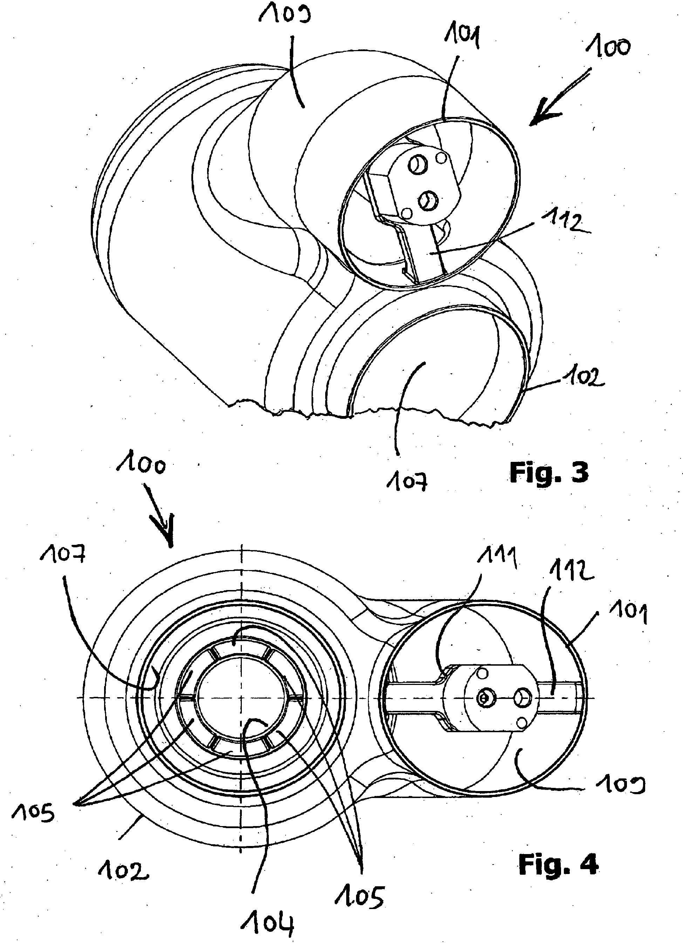

Auf Grund des seitlich aber im wesentlichen symmetrisch zur Mittelachse der Verteilerkammer angeordneten Trägergaszufuhrrohrabschnitts 109 bilden sich in der Verteilerkammer (wenn diese die von Fig. 2 gezeigte Stellung aufweist) zwei außen um das abführende Rohrteil 107 umlaufende, tendenziell aufwärts steigende Teilströmungen aus, die mit der erforderlichen Gleichmäßigkeit über die meist mehreren (hier insgesamt 6) Mündungen austreten, welche den Trägergasauslass 105 bilden, vgl. Fig. 4 und Fig. 2.

Der Injektor 111 ist stromaufwärts der Wirbelkammer angeordnet. Er ist vorzugsweise auf einem Steg 112 positioniert, der den Trägergaszufuhrrohrabschnitt 109 durchquert.

### Bezugszeichenliste

- 1: Kühlvorrichtung
- 2: Pumpe
- 3: Trägergaskanal
- 4: Druckseite
- 5: Saugseite
- 6: Kühlkammer
- 7: Injektor
- 8: Kühler
- 9: Kühlaggregat
- 10: Mantel (der Pumpe)
- 11: Pumpe für Kühlmedium
- 12: erste Leiteinrichtung
- 13: zweite Leiteinrichtung
- 14: dritte Leiteinrichtung
- 15: Zuführeinrichtung
- 16: Werkzeugaufnahme
- 17: Speiseleitung für das Kühlmedium
- 18: Schrumpffutter bzw. zu kühlender Gegenstand
- 19: Schiebemuffe
- 20: Tischplatte
- 21: Lufthaube
- 22: Läufer
- 23: Trägergasstrom
- 24: Kühlmedium
- 25: Austrittsquerschnitt
- 28: Tischplatte

- 100: Schleusenteil
- 101: Eingangstutzen
- 102: Ausgangsstutzen
- 103.: nicht vergeben
- 104: Einführöffnung
- 105: Trägergasauslass
- 106: Verteilerkammer
- 107: abführender Rohrteil
- 108: Trennwand
- 109: Trägergaszufuhrrohrabschnitt
- 110: Schrumpffutter
- 111: Injektor
- 112: Steg

## Patentansprüche

1. Vorrichtung (1) zum Kühlen eines zuvor einer wärmeapplikation unterworfenen Schrumpfverbundes, insbesondere in Gestalt eines Schrumpffutters (18) in das der Schaft eines Werkzeugs ein- oder ausgespannt wurde, wobei die Vorrichtung eine Pumpe (2) umfasst, mit Hilfe derer sie einen Trägergasstrom (23), insbesondere einen Luftstrom erzeugt, welcher mit einem flüssigen Kühlmedium (24), insbesondere Wasser, befrachtet wird, so dass ein volumenmäßig überwiegend aus dem Trägergas (23) bestehender Kühlmittelstrom (23, 24) entsteht, der dann zumindest die zu kühlende Partie des Schrumpfverbundes bestreicht, **dadurch gekennzeichnet, dass** der Trägergasstrom (23) in einem im Wesentlichen geschlossenen Kreislauf geführt wird, der aus einer Pumpe (2) vorzugsweise in Gestalt eines Gebläses bzw. Radialgebläses besteht und einem Trägergaskanal der die Druckseite (4) und die Saugseite (3) der Pumpe (2) unter Zwischenschaltung einer Kühlkammer (6) miteinander verbindet, wobei die Kühlkammer vorzugsweise im Querstrom durchströmt wird;

2. Kühlvorrichtung (1) nach einem der vorhergehenden Ansprüche, **dadurch gekennzeichnet, dass** die Kühlvorrichtung stromabwärts des zu kühlenden Gegenstandes einen Kühler (8) aufweist, der dem Kühlmittelstrom (23, 24) zumindest einen Teil der Wärme entzieht, die durch den Kontakt mit dem zu kühlenden Gegenstand aufgenommen wurde;

3. Kühlvorrichtung (1) nach einem der vorhergehenden Ansprüche, **dadurch gekennzeichnet, dass** die Kühlvorrichtung einen Injektor (7) aufweist, der stromaufwärts der Kühlkammer (6) angeordnet ist und den Trägergasstrom (23) mit dem flüssigen Kühlmedium (24) befrachtet, vorzugsweise so, dass sich das flüssige Kühlmedium (24) im Wesentlichen gleichmäßig in dem Trägergasstrom verteilt hat, bevor Kühlmedium und Trägergasstrom die Kühlkammer erreichen;

4. Kühlvorrichtung nach einem der vorhergehenden Ansprüche, **dadurch gekennzeichnet dass** die Kühlkammer (6) so gestaltet und ausgerichtet ist, dass sie das zu kühlende Schrumpffutter (18) derart aufzunehmen vermag, dass der Kühlmittelstrom (23, 24) im Bereich des freien Endes der Hülsenpartie des Schrumpffutters (18) erstmals auf das Schrumpffutter trifft und dann im Wesentlichen in Richtung hin zu dem Ende des Schrumpffutters abfließt, das zur Einspannung in die Werkzeugmaschine bestimmt ist, wobei der Kühlmittelström (23, 24) vorzugsweise als Fallstrom durch die Kühlkammer (6) hindurchgeleitet wird;

5. Kühlvorrichtung (1) nach einem der vorhergehenden Ansprüche, **dadurch gekennzeichnet, dass** - vorzugsweise zwischen dem Injektor (7) und der Kühlkammer (6) - stromaufwärts eine (ggf. erste) Leiteinrichtung (12) angeordnet ist, die den Kühlmittelstrom (23, 24) verwirbelt, ihm vorzugsweise einen Drall verleiht, bevor dieser die Kühlkammer (6) erreicht;

6. Kühlvorrichtung nach einem der vorhergehenden Ansprüche, **dadurch gekennzeichnet, dass** stromaufwärts vor der Kühlkammer (6) bzw. dem zu kühlenden Gegenstand eine (ggf. zweite) Leiteinrichtung (13) angeordnet ist, die den Kühlmittelstrom (23, 24) formt, insbesondere auf den zu kühlenden Gegenstand fokussiert

7. Kühlvorrichtung nach Anspruch 7, **dadurch gekennzeichnet, dass** die (ggf. zweite) Leiteinrichtung (13) eine Düse ist, deren Austrittsquerschnitt (25) verstellbar ist;

8. Kühlvorrichtung (1) nach einem der vorhergehenden Ansprüche, **dadurch gekennzeichnet, dass** unmittelbar in dem Bereich, in dem der Kühlmittelstrom (23, 24) erstmals auf den zu kühlenden Gegenstand trifft, insbesondere im Bereich des freien Endes der zu kühlenden Hülsenpartie eines Werkzeughalters, eine (ggf. dritte) Leiteinrichtung (14) angeordnet ist, die die Größe des freien Strömungsquerschnitts zwischen dem zu kühlenden Gegenstand bzw. der Hülsenpartie und der Wandung der Kühlkammer verringert,

9. Kühlvorrichtung (1) nach Anspruch 9, **dadurch gekennzeichnet, dass** die (ggf. dritte) Leiteinrichtung (14) verstellbar ausgestaltet ist, derart, dass sie als Ganzes in und entgegen der Hauptströmungsrichtung verfahren werden kann und/oder dass der von ihr eingeschlossene freie Strömungsquerschnitt verringert und vergrößert werden kann und/oder dass ihr Anströmwinkel verändert werden kann, so dass sie dem Kühlmittelstrom (23, 24) einen mehr oder minder großen Drall vermittelt;

10. Kühlvorrichtung (1) nach Anspruch 9 oder 10, **dadurch gekennzeichnet, dass** die (ggf. dritte) Leiteinrichtung (14) so gestaltet ist, dass der Kühlmittelstrom (23, 24) vor der Leiteinrichtung (14) einen Staudruck aufbaut und beim Passieren der Leiteinrichtung entspannt wird, dass seine Tendenz zur Wärmeaufnahme verstärkt wird;

11. Kühlvorrichtung nach einem der Ansprüche 1 bis 4, **dadurch gekennzeichnet, dass** der Trägergaskanal einen Schleusenteil (100) mit einer Einführöffnung (104) ausweist, die so gestaltet ist, dass der zu kühlende Teil des bestimmungsgemäß mit der Kühlvorrichtung zu kühlenden Werkstücks durch die Öffnung hindurch bis in den Trägergaskanal hineingeschoben und dort bestimmungsgemäß gekühlt werden kann, vorzugsweise bleibt dabei ein nicht unmittelbar zu kühlender Teil des Werkstücks auch während des Kühlens außerhalb des Trägergaskanals, vorzugsweise verschließt ein nicht unmittelbar zu kühlender Teil des Werkstücks die Einführöffnung bei maximal eingeführtem Werkstücks zumindest im Wesentlichen;

12. Kühlvorrichtung nach Anspruch 12, **dadurch gekennzeichnet, dass** auf der dem Inneren des Trägergaskanal zugewandten Seite der Einführöffnung (104) unmittelbar, oder im Abstand von weniger als 2 cm, im Anschluss an die Einführöffnung ein den zu kühlenden Abschnitt voll oder zumindest 3/4 ringförmig umgreifender Trägergasauslass (105) vorgesehen ist, aus dem ein Trägergasstrom austritt, der den zu kühlenden Teil des Werkstücks bestreicht;

13. Kühlvorrichtung nach Anspruch 12 oder 13, **dadurch gekennzeichnet, dass** stromaufwärts des Trägergasauslasses (105) eine Verteilerkammer (106) vorgesehen ist, die den an den zu kühlenden Teil des Werkstücks heranzuführenden Trägergasstrom entlang des Umfangs des zu kühlenden Werkstücks auf den gesamten Trägergasauslass (105) verteilt, wobei die verteilerkammer vorzugsweise zugleich als wirbelkammer ausgestaltet ist, die die Vermischung von Trägergas und Kühlnebeltröpfchen intensiviert;

14. Kühlvorrichtung nach Anspruch 14, dadurch **geknnzeichnet, dass** sich der Strömungsquerschnitt, den das von der Verteilerkammer (106) in den Bereich des Trägergasauslasses (105) fließende Trägergas zu durchfließen hat, von der Verteilerkammer hin zum Austrittsquerschnitt des Trägergasauslasses verengt;

15. Kühlvorrichtung nach Anspruch 14 oder 15, **dadurch gekennzeichnet, dass** die Verteilerkammer (106) als eine kreisringförmige Kammer ausgestaltet ist, in die der Trägergasstrom von der Seite her eintritt und in deren Zentrum der den Trägergasstrom wieder vom zu kühlenden Werkstück abführende Rohrteil (107) angeordnet ist.

16. Verfahren zum Kühlen eines zuvor einer Wärmeapplikation unterworfenen Gegenstandes, im Regelfall eines mehrteiligen Schrumpfverbundes, insbesondere in Gestalt eines Schrumpf - futters (18) in das der Schaft eines Werkzeugs ein- oder ausgespannt wurde, wobei ein Trägergasstrom (23) erzeugt wird, der mit einem flüssigen Kühlmedium (24) befrachtet wird, so dass er zusammen mit diesem einen Kühlmittelstrom (23, 24) bildet, der auf den zu kühlenden Gegenstand gerichtet wird, **dadurch gekennzeichnet, dass** das den Nebel oder das Gemisch mitbildende Trägergas vorzugsweise mit einer mittleren Geschwindigkeit > 2 m/s besser > 6 m/s in einem geschlossenen Kreislauf mit einer gerichteten Bewegung und unter einem pumpenausgangsseitig anstehenden Überdruck von vorzugsweise < 0,5 bar besser < 0,2 bar idealerweise < 0,15 bar herumgepumpt wird und der zu kühlenden Gegenstand ganz oder teilweise bestreicht.

17. Verwendung eines auf eine bestimmte Geschwindigkeit beschleunigten, sich im Wesentlichen gerichtet bewegenden Gemischs oder Nebels aus einem Trägergas (23), insbesondere Luft, und einem flüssigen Kühlmedium (24), insbesondere Wasser, zur Wiederabkühlung eines Schrumpffutters (18), **dadurch gekennzeichnet, dass** das den Nebel oder das Gemisch mitbildende Trägergas vorzugsweise mit einer mittleren Geschwindigkeit > 2 m/s besser > 6 m/s in einem geschlossenen Kreislauf mit einer gerichteten Bewegung und unter einem pumpenausgangsseitig anstehenden Überdruck von vorzugsweise < 0,5 bar besser < 0,2 bar idealerweise < 0,15 bar herumgepumpt wird und das zu kühlenden Schrumpffutter ganz oder teilweise bestreicht.

## Claims

1. A device (1) for cooling a shrinking assembly previously subjected to a heat application, in particular in the form of a shrink chuck (18) into which the shank of a tool was clamped or from which it was unclamped, wherein the device comprises a pump (2) with which it generates a carrier gas flow (23), in particular an air flow, which is charged with a liquid cooling agent (24), in particular water, so that a coolant flow (23, 24) is generated which, volume-wise, predominantly consists of the carrier gas (23) and which then sweeps over at least the section to be cooled of the shrinking assembly, **characterized in that** the carrier gas flow (23) is conducted in a substantially closed circuit which consists of a pump (2), preferably in the form of a fan or centrifugal fan, and a carrier gas channel interconnecting the pressure side (4) and the suction side (3) of the pump (2) via a cooling chamber (6), with a cross flow preferably flowing through the cooling chamber.

2. The cooling device (1) according to any one of the preceding claims, **characterized in that** the cooling device has a cooler (8) downstream from the item to be cooled, which extracts from the coolant flow (23, 24) at least a part of the heat that was absorbed by contact with the item to be cooled.

3. The cooling device (1) according to any one of the preceding claims, **characterized in that** the cooling device comprises an injector (7) which is disposed upstream of the cooling chamber (6) and which charges the carrier gas flow (23) with the liquid cooling agent (24), preferably in such a way that the liquid cooling agent (24) has been dispersed in the carrier gas flow substantially uniformly prior to the cooling agent and the carrier gas flow reaching the cooling chamber.

4. The cooling device according to any one of the preceding claims, **characterized in that** the cooling chamber (6) is configured and aligned in such a way that it is capable of accommodating the shrink chuck (18) to be cooled in such a way that the coolant flow (23, 24) impacts the shrink chuck for the first time in the area of the free end of the sleeve section of the shrink chuck (18) and then flows off substantially in the direction towards that end of the shrink chuck that is intended for clamping into the machining tool, with the coolant flow (23, 24) being conducted through the cooling chamber (6) preferably as a down flow.

5. The cooling device (1) according to any one of the preceding claims, **characterized in that** - preferably between the injector (7) and the cooling chamber (6) - an (optionally first) guiding device (12) is disposed upstream, which whirls the coolant flow (23, 24), preferably imparting a swirl to it, before it reaches the cooling chamber (6).

6. The cooling device according to any one of the preceding claims, **characterized in that** an (optionally second) guiding device (13) is disposed upstream forward of the cooling chamber (6) or the item to be cooled, which shapes the coolant flow (23, 24), in particular focuses it on the item to be cooled.

7. The cooling device according to claim 7, **characterized in that** the (optionally second) guiding device (13) is a nozzle whose outlet cross section (25) is adjustable.

8. The cooling device (1) according to any one of the preceding claims, **characterized in that** an (optionally third) guiding device (14), which reduces the size of the free flow cross section between the item to be cooled or the sleeve section and the wall of the cooling chamber, is disposed directly in the area in which the coolant flow (23, 24) impacts the item to be cooled for the first time, in particular in the area of the free end of a tool holder's sleeve section to be cooled.

9. The cooling device (1) according to claim 9, **characterized in that** the (optionally third) guiding device (14) is configured to be adjustable in such a way that it can be moved in its entirety in and contrary to the main flow direction, and/or that the free flow cross section enclosed by it can be reduced and increased, and/or that its angle of incidence can be changed so that it imparts a stronger or weaker swirl to the coolant flow (23, 24).

10. The cooling device (1) according to claim 9 or 10, **characterized in that** the (optionally third) guiding device (14) is configured in such a way that the coolant flow (23, 24) builds up a back pressure in front of the guiding device (14) and is relieved upon passing the guiding device, that its tendency to absorb heat is increased.

11. The cooling device according to any one of the claims 1 to 4, **characterized in that** the carrier gas channel comprises a lock part (100) with an insertion opening (104) configured in such a way that the part which is to be cooled of the workpiece to be cooled as intended with the cooling device can be pushed through the opening into the carrier gas channel and cooled there as intended; in the process, a part of the workpiece that is not to be cooled directly preferably remains outside the carrier gas channel also during the cooling process; preferably, a part of the workpiece that is not to be cooled directly at least substantially seals the insertion opening when the workpiece is inserted to the maximum extent.

12. The cooling device according to claim 12, **characterized in that** a carrier gas outlet (105), which grasps the section to be cooled in the manner of a full or at least ¾ ring, and from which a carrier gas flow exits that sweeps over the workpiece's part to be cooled, is provided on the side of the insertion opening (104) that faces the inside of the carrier gas channel, following the insertion opening immediately or at a distance of less than 2 cm.

13. The cooling device according to claim 12 or 13, **characterized in that** a distributor chamber (106) is provided upstream of the carrier gas outlet (105), which distributes the carrier gas flow to be guided towards the workpiece's part to be cooled along the circumference of the workpiece to be cooled over the entire carrier gas outlet (105), with the distributor chamber at the same time being preferably configured as a swirling chamber that intensifies the intermixing of the carrier gas and the cooling mist droplets.

14. The cooling device according to claim 14, **characterized in that** the flow cross section, through which the carrier gas flowing from the distributor chamber (106) into the area of the carrier gas outlet (105) has to flow, narrows from the distributor chamber towards the outlet cross section of the carrier gas outlet.

15. The cooling device according to claim 14 or 15, **characterized in that** the distributor chamber (106) is configured as a circular ring-shaped chamber into which the carrier gas flow enters from the side and in whose center the pipe part (107) is disposed that leads off the carrier gas flow away from the workpiece to be cooled.

16. A method for cooling off an item previously subjected to a heat application, as a rule a multi-part shrinking assembly, in particular in the form of a shrink chuck (18) into which the shank of a tool was clamped or from which it was unclamped, wherein a carrier gas flow (23) is generated which is charged with a liquid cooling agent (24) so that, together with that, it forms a coolant flow (23, 24) that is directed onto the item to be cooled, **characterized in that** the carrier gas co-forming the mist or the mixture is preferably pumped around at a mean speed of > 2 m/s, better > 6 m/s, in a closed circuit with a directed movement and at an overpressure provided at the pump outlet of preferably < 0.5 bar, better < 0.2 bar, ideally < 0.15 bar, and sweeps over the item to be cooled entirely or partially.

17. Use of a mixture or mist, which is accelerated to a certain speed, moves in a substantially directed manner and consists of a carrier gas (23), in particular air, and a liquid cooling agent (24), in particular water, for cooling off again a shrink chuck (18), **characterized in that** the carrier gas co-forming the mist or the mixture is preferably pumped around at a mean speed of > 2 m/s, better > 6 m/s, in a closed circuit with a directed movement and at an overpressure provided at the pump outlet of preferably < 0.5 bar, better < 0.2 bar, ideally < 0.15 bar, and sweeps over the shrink chuck to be cooled entirely or partially.

## Revendications

1. Dispositif pour refroidir un composite rétractable soumis auparavant à une application thermique, en particulier sous la configuration d'une gaine rétractable (18) dans laquelle a été introduit la tige d'un outil, le dispositif comprenant une pompe (2) à l'aide de laquelle il engendre un courant de gaz porteur (23), en particulier un courant d'air qui est chargé d'un agent de refroidissement liquide (24), en particulier d'eau, de sorte qu'il apparaît un courant d'agent de refroidissement (23, 24) constitué en majeure partie, en termes de volume, par le gaz porteur (23) et qui vient ensuite lécher au moins la partie à refroidir du composite rétractable,
**caractérisé en ce que** le courant de gaz porteur (23) est mené dans un circuit sensiblement fermé, qui est constitué d'une pompe (2), de préférence sous la configuration d'une soufflante ou d'un ventilateur radial, et d'un canal de gaz porteur qui relie l'un à l'autre le côté refoulement (4) et le côté aspiration (3) de la pompe (2) avec interposition d'une chambre de refroidissement (6), ladite chambre de refroidissement étant de préférence traversée en courant croisé.

2. Dispositif de refroidissement (1) selon l'une des revendications précédentes,
**caractérisé en ce que** le dispositif de refroidissement comprend, en aval de l'objet à refroidir, un refroidisseur (8) qui evacue du courant d'agent de refroidissement (23, 24) au moins une partie de la chaleur qui a été absorbée par le contact avec l'objet à refroidir.

3. Dispositif de refroidissement (1) selon l'une des revendications précédentes,
**caractérisé en ce que** le dispositif de refroidissement comprend un injecteur (7), qui est agencé en amont de la chambre de refroidissement (6) et qui charge le courant de gaz porteur (23) avec l'agent de refroidissement liquide (24), de préférence de telle façon que l'agent de refroidissement liquide (24) se répartit sensiblement régulièrement dans le courant de gaz porteur avant que l'agent de refroidissement et le courant de gaz porteur atteignent la chambre de refroidissement.

4. Dispositif de refroidissement selon l'une des revendications précédentes,
**caractérisé en ce que** la chambre de refroidissement (6) est conçue et orientée de telle façon qu'elle est capable de recevoir la gaine rétractable à refroidir (18) de sorte que le courant d'agent de refroidissement (23, 24) atteint la première fois la gaine rétractable dans la région de l'extrémité libre de la partie en forme de douille du manchon rétractable (18), et s'écoule ensuite sensiblement en direction de l'extrémité de la gaine rétractable qui est destinée à être enserrée dans la machine-outil, et le courant d'agent de refroidissement (23, 24) est mené à travers la chambre de refroidissement (6), de préférence sous la forme d'un courant en chute.

5. Dispositif de refroidissement (1) selon l'une des revendications précédentes,
**caractérisé en ce qu'**un système (le cas échéant premier système) de guidage (12) est agencé en amont, de préférence entre l'injecteur (7) et la chambre de refroidissement (6), système qui met le courant d'agent de refroidissement (23, 24) en tourbillonnement, et lui confère de préférence un effet rotatif, avant que celui-ci atteigne la chambre de refroidissement.

6. Dispositif de refroidissement selon l'une des revendications précédentes,
**caractérisé en ce qu'**un système (le cas échéant second système) de guidage (13) est agencé en amont de la chambre de refroidissement (6) ou respectivement de l'objet à refroidir, système qui met en forme le courant d'agent de refroidissement (23, 24), en particulier en le focalisant vers l'objet à refroidir.

7. Dispositif de refroidissement selon la revendication 6, **caractérisé en ce que** le système (le cas échéant second système) de guidage (13) est une buse dont la section de sortie (25) est réglable.

8. Dispositif de refroidissement (1) selon l'une des revendications précédentes,
**caractérisé en ce qu'**un système (le cas échéant troisième système) de guidage (14) est agencé directement dans la région dans laquelle le courant d'agent de refroidissement (23, 24) tombe pour la première fois sur l'objet à refroidir, en particulier dans la région de l'extrémité libre de la partie en forme de douille à refroidir d'un porte-outil, système qui réduit la taille de la section d'écoulement libre entre l'objet à refroidir ou respectivement la partie en forme de douille et la paroi de la chambre de refroidissement.

9. Dispositif de refroidissement (1) selon la revendication 8, **caractérisé en ce que** le système (le cas échéant troisième système) de guidage (14) est conçu réglable, de telle façon qu'il peut être déplacé dans son ensemble dans la direction d'écoulement principale et en sens contraire, et/ou **en ce que** la section d'écoulement libre qu'il enferme peut être réduite et agrandie, et/ou **en ce que** son angle d'attaque peut être modifié, de sorte qu'il confère au courant d'agent de refroidissement (23, 24) un effet rotatif plus ou moins fort.

10. Dispositif de refroidissement (1) selon la revendication 8 ou 9, **caractérisé en ce que** le système (le cas échéant troisième système) de guidage (14) est conçu de telle façon que le courant d'agent de refroidissement (23, 24) accumule une pression statique devant le système de guidage (14) et est détendu lorsqu'il a passé le système de guidage, de sorte que sa tendance à absorber la chaleur est renforcée.

11. Dispositif de refroidissement selon l'une des revendications 1 à 4, **caractérisé en ce que** le canal de gaz porteur comprend une partie formant sas (100) avec une ouverture d'introduction (104), laquelle est conçue de telle façon que la partie à refroidir de la pièce à oeuvrer qu'il s'agit de refroidir avec le dispositif de refroidissement est enfilée à travers l'ouverture jusque dans le canal de gaz porteur et peut être refroidie dans celui-ci d'une manière conforme à sa destination, et que de préférence il reste ici une partie de la pièce à oeuvrer qu'il ne s'agit pas de refroidir directement, également pendant le refroidissement à l'extérieur du canal de gaz porteur, et de préférence une partie de la pièce à oeuvrer qu'il ne s'agit pas de refroidir directement obture au moins sensiblement une ouverture d'introduction lorsque la pièce à oeuvrer est introduite au maximum.

12. Dispositif de refroidissement selon la revendication 11,
**caractérisé en ce qu'**il est prévu une sortie de gaz porteur (105) qui entoure le tronçon à refroidir en totalité ou au moins en formant les 3/4 d'un cercle, du côté de l'ouverture d'introduction (104) tourné vers l'intérieur du canal de gaz porteur, soit directement soit à une distance inférieure à 2 cm, en raccordement à l'ouverture d'introduction, sortie de gaz hors de laquelle s'échappe un courant de gaz porteur qui lèche la partie à refroidir de la pièce à oeuvrer.

13. Dispositif de refroidissement selon la revendication 11 ou 12, **caractérisé en ce qu'**il est prévu une chambre de répartition (106) en amont de la sortie de gaz porteur (105), chambre qui répartit sur la totalité de la sortie de gaz porteur (105) le courant de gaz porteur qui doit être amené à la partie à refroidir de la pièce à oeuvrer, le long de la périphérie de la pièce à refroidir, ladite chambre de répartition étant de préférence simultanément conçue comme chambre de tourbillonnement, qui intensifie le mélange du gaz porteur et des gouttelettes de brouillard de l'agent de refroidissement.

14. Dispositif de refroidissement selon la revendication 13, **caractérisé en ce que** la section d'écoulement, que le gaz porteur s'écoulant de la chambre de répartition (116) jusque dans la région de la sortie de gaz porteur (105) doit traverser, va en se rétrécissant depuis la chambre de répartition jusqu'à la section de sortie de la sortie de gaz porteur.

15. Dispositif de refroidissement selon la revendication 13 ou 14, **caractérisé en ce que** la chambre de répartition (106) est conçu comme une chambre de forme circulaire dans laquelle le courant de gaz porteur entre depuis le côté, et au centre de laquelle est agencée la partie tubulaire (107) qui évacue le courant de gaz porteur à nouveau depuis la pièce à oeuvrer à refroidir.

16. Procédé pour refroidir un objet auparavant soumis à une application thermique, en règle générale un composite rétractable en plusieurs parties, en particulier sous la configuration d'une gaine rétractable (18) dans laquelle a été enserrée la tige d'un outil, dans lequel on engendre un courant de gaz porteur (23) qui est chargé d'un agent de refroidissement liquide (24), de sorte qu'il forme conjointement avec celui-ci un courant d'agent de refroidissement (23, 24) qui est dirigé vers l'objet à refroidir,
**caractérisé en ce que** le gaz porteur qui contribue à constituer le brouillard ou le mélange est pompé en recirculation de préférence avec une vitesse moyenne > 2 m/s, ou mieux > 6 m/s, dans un circuit fermé avec un mouvement dirigé et sous une surpression, apparaissant du côté de la sortie de la pompe, de préférence de < 0,5 bar, ou mieux < 0,2 bar, et de manière idéale < 0,15 bar, et vient lécher l'objet à refroidir en totalité ou partiellement.

17. Utilisation d'un mélange ou d'un brouillard, accéléré à une vitesse déterminée et en déplacement sensiblement dirigé, constitué d'un gaz porteur (23), en particulier d'air, et d'un agent de refroidissement liquide (24), en particulier d'eau, pour le refroidissement d'une gaine rétractable (18),
**caractérisé en ce que** le gaz porteur qui contribue à constituer le brouillard ou le mélange est pompé en recirculation de préférence avec une vitesse moyenne > 2 m/s, ou mieux > 6 m/s, dans un circuit fermé avec un mouvement dirigé et sous une surpression, apparaissant du côté de sortie de la pompe, de préférence de < 0,5 bar, ou mieux < 0,2 bar, et de manière idéale < 0,15 bar, et vient lécher l'objet à refroidir en totalité ou partiellement.
